Europäisches Patentamt

European Patent Office

Office européen des brevets

(19)

(11) Numéro de publication : **0 328 437 B1**

# (12) FASCICULE DE BREVET EUROPEEN

(45) Date de publication du fascicule du brevet :
06.11.91 Bulletin 91/45

(51) Int. Cl.⁵ : **B60T 17/22,** B60T 13/52, B60R 16/02

(21) Numéro de dépôt : **89400272.4**

(22) Date de dépôt : **31.01.89**

(54) **Dispositif de connexion électrique et système de commande d'une unité de freinage d'un véhicule automobile équipé d'un tel dispositif.**

(30) Priorité : 09.02.88 FR 8801518

(43) Date de publication de la demande :
16.08.89 Bulletin 89/33

(45) Mention de la délivrance du brevet :
06.11.91 Bulletin 91/45

(84) Etats contractants désignés :
DE GB IT

(56) Documents cités :
DE-A- 3 513 048
DE-B- 1 934 898
FR-A- 2 557 355
GB-A- 2 067 251

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Petiot, Jean-Paul**
**42 route d'Orsay**
**F-91460 Marcoussis (FR)**

(74) Mandataire : **Durand, Yves Armand Louis et al**
**CABINET WEINSTEIN 20, Avenue de**
**Friedland**
**F-75008 Paris (FR)**

EP 0 328 437 B1

## Description

La présente invention a essentiellement pour objet un dispositif de connexion électrique destiné à équiper un système de commande d'une unité de freinage d'un véhicule, par exemple, automobile.

Elle vise également un système de commande d'une unité de freinage d'un véhicule automobile équipé d'un tel dispositif.

Le montage des véhicules automobiles, dans les processus rationnels et compétitifs de production, nécessite l'utilisation de moyens automatisés, tels que par exemple l'utilisation de robots.

Ainsi, et afin d'optimiser l'utilisation de ces moyens automatiques, il est nécessaire de prévoir des dispositifs minimisant le nombre d'opérations lors des phases de montage en éliminant l'intervention manuelle des opérateurs.

Par conséquent, l'invention a pour but de fournir un dispositif de connexion électrique réalisant efficacement la liaison électrique des moyens de contrôle du système de commande d'une unité de freinage d'un véhicule automobile avec les organes de signalisation ou avec les unités électroniques de gestion des fonctions de contrôle de ce véhicule, tout en minimisant le nombre des opérations nécessaires au montage de l'ensemble sur le tablier de ce même véhicule.

A cet effet, l'invention a pour objet un dispositif de connexion électrique destiné à équiper un système de commande d'une unité de freinage d'un véhicule, par exemple, automobile, caractérisé en ce qu'il comporte au moins un élément connecteur rendu solidaire du système de commande, cet élément connecteur étant d'une part, relié électriquement à au moins un des moyens de contrôle du système de commande, et d'autre part susceptible de s'enficher dans un boîtier récepteur monté sur le tablier du véhicule pour permettre simultanément le montage électrique des moyens de contrôle du système de commande et le montage mécanique du système de commande sur le tablier du véhicule.

On comprend donc que l'on réalise un ensemble système de commande-liaisons électriques qui est homogène, éliminant l'opération de montage nécessaire à l'assemblage des éléments électriquement conducteurs des moyens de contrôle du système de commande de l'unité de freinage avec les éléments électriquement conducteurs des organes de signalisation ou avec ceux des unités électroniques de gestion des fonctions de contrôle du véhicule.

Suivant une autre caractéristique, l'élément connecteur est rendu solidaire du système de commande par l'intermédiaire d'une liaison amovible.

Suivant encore une autre caractéristique de l'invention, l'élément connecteur est disposé à la périphérie d'un corps ou cylindre d'un mécanisme d'assistance du système de commande et est muni de broches de liaison qui sont parallèles à un axe longitudinal du système de commande et dirigées vers des broches de liaison complémentaires du boîtier récepteur.

On précisera encore ici que la liaison amovible de l'élément connecteur sur le mécanisme d'assistance comprend un support, fixé sur ce mécanisme et muni d'au moins une fente longitudinale recevant une patte de guidage de l'élément connecteur qui est maintenu longitudinalement par un moyen de blocage lors de l'enfichage des broches.

Selon encore une autre caractéristique de cette invention, l'élément connecteur comporte sur un de ses côtés libres au moins un moyen de liaison, par exemple du type liaison en T, susceptible de recevoir un moyen de liaison correspondant d'un deuxième élément connecteur pour permettre leur emboîtement.

Par ailleurs on précisera que le moyen de liaison disposé sur un des côtés libres de l'élément connecteur est de forme complémentaire à la patte de guidage de cet élément et est disposé sur le côté opposé à la patte de guidage, pour permettre l'emboîtement mutuel de plusieurs éléments connecteurs.

D'autre part, le moyen de blocage longitudinal est formé de languettes élastiques solidaires respectivement des éléments connecteurs et qui s'étendent, dans une direction opposée aux broches de liaison, entre un des éléments connecteurs et le support ou l'autre élément connecteur avec lequel il s'emboîte, ces languettes comportant un téton destiné à être reçu dans un logement correspondant du support ou de l'autre élément connecteur associé et faisant saillie de l'élément connecteur dont elles sont solidaires pour permettre leur manipulation.

Mais d'autres caractéristiques et avantages de l'invention apparaîtront mieux dans la description détaillée qui suit et se réfère aux dessins annexés, donnés uniquement à titre d'exemple et dans lesquels :

La figure 1 est une vue de côté schématique d'un système de commande d'une unité de freinage équipé du dispositif de connexion conforme à l'invention après montage de l'ensemble sur le tablier du véhicule par un moyen automatisé, tel qu'un robot ;

La figure 2 est une vue de dessus du réservoir, alimentant en liquide de freinage le système de commande, dont un capot protecteur du moyen de contrôle a été ôté ;

La figure 3 est une vue en coupe transversale d'un premier mode de réalisation d'un dispositif de connexion conforme à l'invention, faite suivant la ligne III-III de la figure 1 ;

La figure 4 est une vue en coupe longitudinale d'un deuxième mode de réalisation d'un dispositif de connexion conforme à l'invention représentant le dispositif avant son enfichage dans un boîtier récepteur solidaire du véhicule ;

La figure 5 est une vue en coupe transversale partielle du deuxième mode de réalisation faite suivant la ligne V-V de la figure 4 ; et

La figure 6 est une vue de dessus d'un support recevant le dispositif de connexion selon l'invention et dans laquelle le dispositif de connexion et le boîtier récepteur sont représentés en traits interrompus afin de permettre une meilleure compréhension de l'invention.

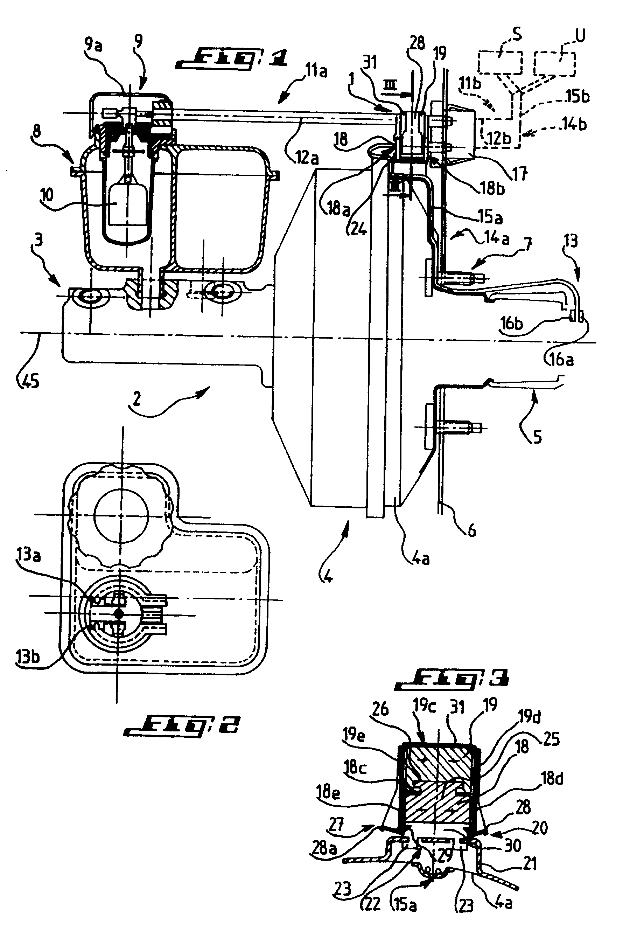

En se reportant à la figure 1, un dispositif de connexion électrique 1 conforme à cette invention équipe un système de commande 2 d'une unité de freinage d'un véhicule automobile, non représenté.

Ce système de commande 2, d'un type classique, comporte un maître-cylindre 3 pilotant de façon hydraulique le ou les pistons des cylindres de frein associés aux roues du véhicule, non représenté.

Par ailleurs, le système de commande 2 comporte un mécanisme d'assistance par dépression 4, d'une part agissant sur le piston du maître-cylindre 3, et d'autre part commandé par une tige de commande disposée dans un élément support 5 préassemblé avec le système de commande 2, cette tige étant actionnée par une pédale de freinage, non représentée, placée à la disposition du conducteur dans l'habitacle du véhicule.

A cet effet, un cylindre ou corps 4a du mécanisme d'assistance 4 est monté fixement sur un tablier 6 du véhicule par des moyens de fixation du type vis et écrou 7, l'écrou étant rapporté et mis en place ultérieurement par une unité de vissage automatique, non représentée.

D'autre part, le maître-cylindre 3 est alimenté en liquide de freinage par un réservoir 8 muni d'un moyen de contrôle 9 du niveau de liquide de freinage contenu dans ce réservoir.

Le moyen de contrôle 9 du niveau de liquide du réservoir 8 est constitué d'un flotteur 10 susceptible de mettre en contact, lorsque celui-ci occupe sa position limite inférieure de sécurité, deux éléments de contact électriquement conducteurs, non représentés, ce qui ferme un circuit de contrôle du niveau de liquide de freinage dont une première section 11a et une deuxième section 11b sont représentées.

La première section 11a du circuit de contrôle 9 du niveau de liquide de freinage est constituée de deux éléments électriquement conducteurs ou fils 12a généralement regroupés, reliés, d'une part à des contacteurs 13a, 13b protégés par un capot protecteur 9a et reliés respectivement aux deux éléments de contact du moyen de contrôle 9, et d'autre part au dispositif de connexion électrique 1.

Par ailleurs, l'élément support 5 dans lequel passe la tige de commande reliée à la pédale de freinage (non représentées) est pourvu d'un moyen de contrôle 13 de l'état de fonctionnement du système de commande 2.

Ce moyen de contrôle 13 fait partie d'un circuit de contrôle de l'état de fonctionnement du système de commande 2.

Une première section 14a et une deuxième section 14b de ce circuit sont représentées sur la figure 1.

Le moyen de contrôle 13 peut être notamment la commande des feux de stop. Dans ce cas, la première section 14a du circuit de contrôle comporte deux éléments électriquement conducteurs ou fils 15a reliés, à l'une de leurs extrémités, au dispositif de connexion 1 et se terminant, à leur autre extrémité, par des contacteurs ou plots 16a et 16b respectivement. Un dispositif (non représenté), actionné par la tige de commande, permet de mettre les plots 16a et 16b en contact l'un avec l'autre ou de les séparer suivant la position de la pédale de freinage pour commander l'allumage des feux de stop.

Le dispositif de connexion 1 est relié électriquement à un boîtier récepteur 17 monté sur le tablier 6 du véhicule et qui est connecté à des organes de signalisation S ou à une unité électronique de gestion U des fonctions de contrôle du véhicule.

Ainsi, la deuxième section 11b du circuit de contrôle 9 du niveau de liquide de freinage est constituée de deux éléments électriquement conducteurs ou fils 12b, généralement regroupés, reliés, d'une part au boîtier récepteur 17, et d'autre part aux organes de signalisation S ou à l'unité électronique de gestion U des fonctions de contrôle du véhicule, la deuxième section 14b du circuit de contrôle de l'état de fonctionnement du système de commande 2 étant constituée de deux éléments électriquement conducteurs ou fils 15b, généralement regroupés, reliés, d'une part au boîtier récepteur 17, et d'autre part aux organes de signalisation S ou à l'unité électronique de gestion U des fonctions de contrôle du véhicule.

Le dispositif de connexion électrique 1 comporte deux éléments connecteurs 18 et 19 reliés respectivement aux éléments électriquement conducteurs ou fils 12a et 15a des moyens de contrôle respectifs 9 et 13 du système de commande 2.

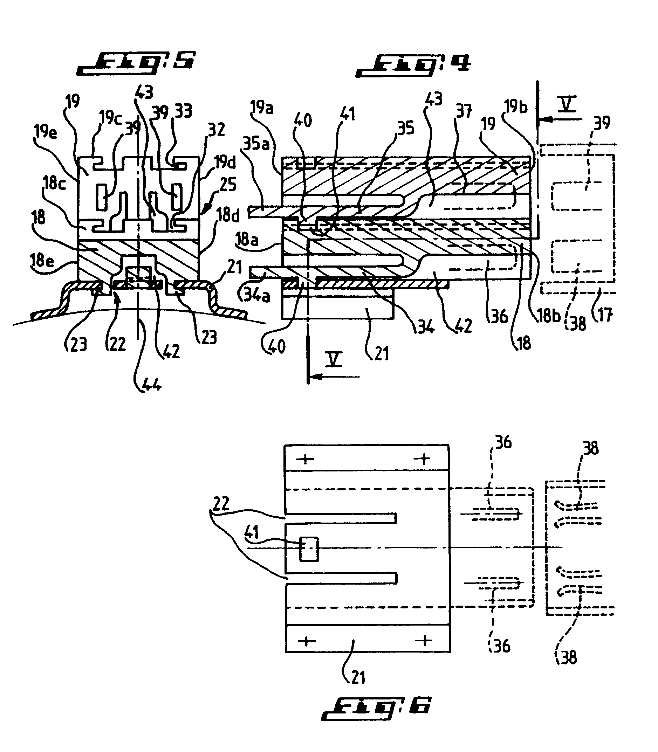

En se reportant à la figure 3, et suivant un premier mode de réalisation du dispositif selon l'invention, l'élément connecteur 18 est rendu solidaire du système de commande 2 par l'intermédiaire d'une liaison amovible 20 et est disposé à la périphérie du corps ou cylindre 4a du mécanisme d'assistance 4.

La liaison amovible 20 est constituée d'un support 21 fixé sur le corps ou cylindre 4a du mécanisme d'assistance 4 par l'intermédiaire de moyens de fixation connus, par exemple par collage, soudage ou analogue.

Le support 21 est muni d'une ou plusieurs fentes longitudinales 22, visibles sur la figure 6, recevant respectivement une ou plusieurs pattes de guidage 23 de l'élément connecteur 18.

L'élément connecteur 18 est maintenu longitudinalement par un moyen de blocage constitué d'un talon 24, visible sur la figure 1, solidaire du support 21 du côté 18a de l'élément connecteur 18, qui est opposé au boîtier récepteur 17.

Le côté 18a de l'élément connecteur 18 vient donc en appui contre le talon 24 lors de l'enfichage du dispositif de connexion 1 avec le boîtier récepteur 17.

Bien entendu, le talon 24 peut être réalisé sur l'élément connecteur 18, sur le côté 18b de l'élément connecteur 18, dirigé vers le boîtier récepteur 17 pour venir en appui contre le support 21.

L'élément connecteur 18 comporte sur son côté supérieur 18c un moyen de liaison 25 du type liaison en T, recevant un moyen de liaison 26 correspondant du deuxième élément connecteur 19, qui est disposé à la base de celui-ci, ce qui permet l'emboîtement longitudinal des éléments connecteurs 18 et 19 entre eux.

Le moyen de liaison 25 peut bien entendu être disposé sur un des côtés libres, 18d ou 18e, latéraux de l'élément connecteur 18.

L'élément connecteur 19 peut comporter un moyen de blocage identique au moyen de blocage de l'élément connecteur 18 et peut être muni d'un moyen de maintien 27 formé d'une ou plusieurs languettes 28 dont l'extrémité libre 28a comporte un crochet élastique 29 s'insérant par encliquetage ou clippage dans un logement 30 réalisé dans l'élément connecteur 18.

La ou les languettes 28 peuvent être fixées à un chapeau rapporté 31 venant coiffer les éléments connecteurs 18 et 19.

Par ailleurs, ces languettes 28 peuvent être fixées directement sur les faces latérales 19d et 19e de l'élément connecteur 19 ou venir de matière avec celui-ci.

En se reportant désormais aux figures 4 et 5, et suivant un deuxième mode de réalisation du dispositif de connexion électrique selon l'invention, on remarquera que le moyen de liaison 25 est de forme complémentaire aux pattes de guidage 23 de l'élément connecteur 18 et est disposé sur le côté opposé à la patte de guidage 23, c'est-à-dire sur le côté supérieur 18c de l'élément connecteur 18, pour permettre l'emboîtement mutuel de plusieurs éléments connecteurs.

A cet effet, l'élément connecteur 19 comporte deux pattes de guidage 32 identiques aux pattes de guidage 23 de l'élément connecteur 18, et un logement 33 de section transversale identique au moyen de liaison 25, c'est-à-dire en forme d'un T dont la partie verticale est prévue débouchante vers le côté supérieur 19c de l'élément connecteur 19, ce logement 33 étant adapté à recevoir les pattes de guidage d'un troisième élément connecteur non représenté.

Ainsi, on peut réaliser des éléments connecteurs de forme identique dont les moyens de liaison permettent l'emboîtement et l'empilement à l'infini.

Chaque élément connecteur 18 et 19 comporte un moyen de blocage longitudinal formé de languettes élastiques 34 et 35 solidaires respectivement des éléments connecteurs 18 et 19 et qui s'étendent dans une direction opposée à des broches de liaison 36 et 37, c'est-à-dire vers les côtés 18a et 19a des éléments connecteurs respectifs 18 et 19.

On remarquera ici que les languettes élastiques 34 et 35 font saillie par leurs extrémités libres respectives 34a et 35a des éléments connecteurs 18 et 19 dont elles sont respectivement solidaires pour permettre leur manipulation et le déblocage longitudinal des éléments connecteurs 18 et 19.

Les broches de liaison 36 et 37 s'étendent respectivement des éléments connecteurs 18 et 19 en direction de leurs côtés respectifs 18b et 19b, afin de pourvoir s'enficher dans des broches complémentaires respectives 38 et 39 du boîtier récepteur 17 monté sur le tablier 6 du véhicule.

Ces broches de liaison 36 et 37 sont reliées respectivement aux éléments électriquement conducteurs 15a et 12a tandis que les broches complémentaires 38 et 39 sont reliées respectivement aux éléments électriquement conducteurs 15b et 12b.

Les languettes élastiques 34 et 35 sont disposées entre l'élément connecteur 18, 19 dont elles sont solidaires et le support 21 ou l'autre élément connecteur 18, 19 avec lequel elles s'emboîtent.

Par ailleurs, elles comportent un téton 40 dirigé vers le support 21 ou l'autre élément connecteur associé, ce téton 40 étant destiné à être reçu dans un logement correspondant 41 du support 21 ou de l'autre élément connecteur.

Les languettes élastiques 34 et 35 sont disposées dans des évidements 42, 43 réalisés entre les pattes de guidage 23 et 32 des éléments connecteurs 18 et 19, sensiblement sur un axe central 44 du dispositif de connexion 1.

Ainsi, le logement 41 est pratiqué sur le support 21 entre les fentes 22 et sur les côtés 18c et 19c des éléments connecteurs respectifs 18 et 19.

Ainsi, on comprendra qu'il est désormais possible d'optimiser le montage du système de commande de l'unité de freinage sur le tablier du véhicule en effectuant simultanément le montage électrique des moyens de contrôle du système de commande et le montage mécanique du système de commande sur le tablier du véhicule en enfichant directement les broches de liaison 36 et 37 des éléments connecteurs 18 et 19 qui sont parallèles à un axe longitudinal 45 du système de commande, dans le boîtier récepteur monté sur le tablier du véhicule par l'intermédiaire de ses broches complémentaires 38 et 39, elles-mêmes parallèles à l'axe longitudinal 45 du système de commande.

On remarquera ici que le dispositif de connexion 1 peut comporter un seul élément connecteur pourvu des broches de liaison 36 et 37 disposées et isolées entre elles de façon appropriée.

Bien entendu, l'invention n'est nullement limitée aux modes de réalisation décrits et illustrés qui n'ont été donnés qu'à titre d'exemple.

## Revendications

1. Dispositif de connexion électrique destiné à équiper un système de commande d'une unité de freinage d'un véhicule, par exemple, automobile, caractérisé en ce qu'il comporte au moins un élément connecteur (18, 19) rendu solidaire du système de commande, cet élément connecteur étant d'une part, relié électriquement à au moins un des moyens de contrôle (9, 13) du système de commande (2), et d'autre part susceptible de s'enficher dans un boîtier récepteur (17) monté sur un tablier (6) du véhicule pour permettre simultanément le montage électrique des moyens de contrôle du système de commande et le montage mécanique du système de commande sur le tablier du véhicule.

2. Dispositif selon la revendication 1, caractérisé en ce que l'élément connecteur (18, 19) est rendu solidaire du système de commande par l'intermédiaire d'une liaison amovible (20).

3. Dispositif selon la revendication 1 ou 2, caractérisé en ce que l'élément connecteur (18, 19) est disposé à la périphérie d'un corps ou cylindre (4a) d'un mécanisme d'assistance (4) du système de commande (2) et est muni de broches de liaison (36, 37) qui sont parallèles à un axe longitudinal (45) du système de commande (2) et dirigées vers des broches de liaison (38, 39) complémentaires du boîtier récepteur (17).

4. Dispositif selon l'une des revendications 1 à 3, caractérisé en ce que la liaison amovible (20) de l'élément connecteur (18) sur le mécanisme d'assistance (4) comprend un support (21), fixé sur ce mécanisme et muni d'au moins une fente longitudinale (22) recevant une patte de guidage (23) de l'élément connecteur (18) qui est maintenu longitudinalement par un moyen de blocage lors de l'enfichage des broches.

5. Dispositif selon l'une des revendications 1 à 4, caractérisé en ce que l'élément connecteur (18) comporte sur un de ses côtés libres (18c, 18d, 18e) un moyen de liaison (25), par exemple du type liaison en T, susceptible de recevoir un moyen de liaison (26) correspondant d'un deuxième élément connecteur (19) pour permettre leur emboîtement.

6. Dispositif selon l'une des revendications 1 à 5, caractérisé en ce que le moyen de liaison (25) disposé sur un des côtés libres de l'élément connecteur (18) est de forme complémentaire à la patte de guidage (23) de cet élément et est disposé sur le côté opposé à la patte de guidage, pour permettre l'emboîtement mutuel de plusieurs éléments connecteurs.

7. Dispositif selon l'une des revendications 1 à 6, caractérisé en ce que le moyen de blocage longitudinal est formé de languettes élastiques (34, 35) solidaires respectivement des éléments connecteurs (18, 19) et qui s'étendent, dans une direction opposée à des broches de liaison (36, 37), entre un élément connecteur et le support ou l'autre élément connecteur avec lequel il s'emboîte, les languettes comportant un téton (40) destiné à être reçu dans un logement (41) correspondant du support ou de l'autre élément connecteur et faisant saillie de l'élément connecteur dont elles sont solidaires pour permettre leur manipulation.

8. Dispositif selon l'une des revendications 1 à 7, caractérisé en ce que les languettes élastiques sont disposées dans des évidements (42, 43) respectifs formés entre les pattes de guidage (23, 32) sensiblement sur l'axe central (44) de l'élément connecteur dont elles sont solidaires.

9. Dispositif selon l'une des revendications 1 à 8, caractérisé en ce que l'un des éléments connecteurs (18, 19) est relié électriquement à un moyen de contrôle (13) de l'état de fonctionnement du système de commande, tandis que l'autre élément connecteur (19, 18) est relié électriquement à un moyen de contrôle (9) du niveau de liquide du réservoir (8) alimentant le maître-cylindre du système de commande.

10. Système de commande d'une unité de freinage d'un véhicule automobile équipé d'un dispositif de connexion électrique selon l'une des revendications 1 à 9.

## Patentansprüche

1. Zur Ausstattung eines Systems zur Betätigung einer Bremseinheit eines zum Beispiel Kraftfahrzeugs bestimmte elektrische Anschlussvorrichtung, dadurch gekennzeichnet, dass sie wenigstens ein mit dem Betätigungssystem in fester Verbindung gesetztes Anschlusselement (18, 19) aufweist, wobei dieses Anschlusselement einerseits an wenigstens einer der Kontrolmittel (9, 13) des Betätigungssystems (2) elektrisch angeschlossen ist and andererseits fähig ist, sich in ein an einer Schürzentafel (6) des Fahrzeugs angeordneten Aufnahmegehäuse (16) einzustecken, um gleichzeitig den elektrischen Einbau der Kontrolmittel des Betätigunssystems und den mechanischen Einbau des Betätigunssystems an der Schürzentafel des Fahrzeugs zu gestatten.

2. Vorrichtung nach Anspruch 1, dadurch gekennzeichnet, dass das Anschlusselement (18, 19) in fester Verbindung mit dem Betätigungssystem über eine lösbare Verbindung (20) gesetzt wird.

3. Vorrichtung nach Anspruch 1 oder 2, dadurch gekennzeichnet, dass das Anschlusselement (18, 19) an dem Umfang eines Körpers bzw. Zylinders (4a) eines Mechanismus (4) zur Bedienungshilfe des Betätigungssystems (2) angeordnet und mit Verbindungssteckstiften (36, 37) versehen ist, die parallel zur Längsachse (45) des Betätigungssystems (2) und in Richtung auf zugehörige Verbindungsstifte (38, 39) des Aufnahmegehäuses (17) verlaufen.

4. Vorrichtung nach einem der Ansprüche 1 bis 3, dadurch gekennzeichnet, dass die lösbare Verbindung (20) des Anschlusselements (18) an dem Hilfemechanismus (4) einen an diesem Mechanismus befestigten und wenigstens mit einem Längsschlitz (22) versehenen Halter (21) aufweist, welcher Längsschlitz einen Führungslappen (23) des Anschlusselements (18) aufnimmt, welches in Längsrichtung durch ein Sperrmittel bei dem Einstöpseln der Steckstifte gehalten wird.

5. Vorrichtung nach einem der Ansprüche 1 bis 4, dadurch gekennzeichnet, dass das Anschlusselement (18) an einer seiner freien Seiten (18c, 18d, 18e) ein Verbindungsmittel (25), zum Beispiel der T-förmigen Verbindungsart aufweist, welches fähig ist, ein entsprechendens Verbindungsmittel (26) eines zweiten Anschlusselements (19) aufzunehmen, um deren Ineinanderfügen zu ermöglichen.

6. Vorrichtung nach einem der Ansprüche 1 bis 5, dadurch gekennzeichnet, dass das an einer der freien Seiten des Anschlusselements (18) angeordnete Verbindungsmittel (25) eine dem Führungslappen (23) dieses Elements formschlüssig entsprechende Gestalt aufweist und an der dem Führungslappen gegenüberliegende Seite angeordnet ist, um das gegenseitige Ineinanderfügen mehrerer Anschlusselementen zu gestatten.

7. Vorrichtung nach einem der Ansprüche 1 bis 6, dadurch gekennzeichnet, dass das Längssperrmittel aus jeweils mit den Anschlusselementen (18, 19) fest verbundenen elastischen Zungen (34, 35) besteht, die sich in einer zu den Verbindungstiften (36, 37) entgesetzten Richtung zwischen einem Anschlusselement und dem Halter bzw. dem anderen Anschlusselement in welches es sich einfügt, erstrecken, wobei die Zungen einen zur Aufnahme in einen entsprechenden Sitz (41) des Halters bzw. des anderen Anschlusselements und von dem Anschlusselement abstehenden Ansatzzapfen (40) aufweisen, wobei sie mit dem Anschlusselement fest verbunden sind, um deren Handhabung zu gestatten.

8. Vorrichtung nach einem der Ansprüche 1 bis 7, dadurch gekennzeichnet, dass die elastischen Zungen jeweils in zwischen den Führungslappen (23, 32) im wesentlichen auf der Mittelachse (44) des Anschlusselements mit welchem sie fest verbunden sind, gebildeten Aussparungen (42, 43) angeordnet sind.

9. Vorrichtung nach einem der Ansprüche 1 bis 8, dadurch gekennzeichnet, dass eines der Anschlusselementen (18, 19) an ein Mittel (13) zur Kontrolle des Arbeitszustandes des Betätigungssystems elektrisch angeschlossen ist, während das andere Anschlusselement (19, 18) an ein Mittel (9) zur Kontrolle des Flüssigkeitsstandes des den Hauptzylinder des Betätigungssystems speisenden Behälters (8) elektrisch angeschlossen ist.

10. Mit einer elektrischen Anschlussvorrichtung gemäss einem der Ansprüche 1 bis 9 ausgerüstetes Betätigungssystems einer Bremseinheit eines Kraftfahrzeugs.

## Claims

1. Electrical connection device intended to fit a system for operating a braking unit of a for example automotive vehicle, characterized in that it comprises at least one connecting element (18, 19) made fast to the operating system, this connecting element being on the one hand electrically connected to at least one of the control means (9, 13) of the operating system (2) and on the other hand susceptible of being plugged into a receiving box (17) mounted on an apron (6) of the vehicle to simultaneously permit the electrical mounting of the control means of the operating system and the mechanical mounting of the operating system onto the apron of the vehicle.

2. Device according to claim 1, characterized in that the connecting element (18, 19) is made fast to the operating system through the medium of a removable connection (20).

3. Device according to claim 1 or 2, characterized in that the connecting element (18, 19) is disposed at the periphery of a body or cylinder (4a) of a mechanism (4) for assisting the operating system (2) and is provided with connecting pins (36, 37) which are parallel to a longitudinal axis (45) of the operating system (2) and directed towards complementary connecting pins (38, 39) of the receiving box (17).

4. Device according to one of claims 1 to 3, characterized in that the removable connection (20) of the connecting element (18) on the assisting mechanism (4) comprises a support (21) fastened onto this mechanism and provided with at least one longitudinal slot (22) receiving a guide lug (23) of the connecting element (18) which is maintained longitudinally by a locking means upon the plugging in of the pins.

5. Device according to one of claims 1 to 4, characterized in that the connecting element (18) comprises on one of its free sides (18c, 18d, 18e) a connecting means (25), for example of the T-shaped connection type susceptible of receiving a connecting means (26) corresponding to a second connecting element (19) for allowing their fitting in.

6. Device according to one of claims 1 to 5, characterized in that the connecting means (25) disposed on one of the free sides of the connecting element (18) is of a complementary shape mating with the guide lug (23) of this element and is disposed on the side opposite to the guide lug to permit the mutual fitting in of several connecting elements.

7. Device according to one of claims 1 to 6, characterized in that the longitudinal locking means is formed of elastic tongues (24, 35) made fast to the connecting elements (18, 19), respectively, and which extend in a direction opposite to the connecting pins (36, 37) between one connecting element and the support or the other connecting element with which it is fitted in, the tongues comprising a snug (40) intended to be received into a corresponding seating (41) of the support or of the other connecting element and projecting from the connecting element to which they are made fast for allowing their manipulation.

8. Device according to one of claims 1 to 7, characterized in that the elastic tongues are disposed within respective recesses (42, 43) formed between the guide lugs (23, 32) substantially on the central axis (44) of the connecting element to which they are made fast.

9. Device according to one of claims 1 to 8, characterized in that one of the connecting elements (18, 19) is electrically connected to a means (13) for controlling the working condition of the operating system, whereas the other connecting element (19, 18) is electrically connected to a means (9) for controlling the level of liquid of the tank (8) feeding the master cylinder of the operating system.

10. System for operating a braking unit of an automotive vehicle fitted with an electrical connecting device according to one of claims 1 to 9.

Fig. 1

Fig. 2

Fig. 3

Fig. 5

Fig. 4

Fig. 6